# EUROPÄISCHE PATENTSCHRIFT

(11) **EP 1 562 141 B1**
(45) Veröffentlichungstag und Bekanntmachung des Hinweises auf die Patenterteilung: **07.10.2009**
(21) Anmeldenummer: 05000988.5
(22) Anmeldetag: 19.01.2005
(51) Int. Cl.: G06K 19/08, G09F 9/37, G02F 1/167

(54) **Wertdokument mit einer Anzeigevorrichtung**
Value paper with a display
Document de valeur avec un affichage

(30) Priorität: 05.02.2004 DE 102004005690
(43) Veröffentlichungstag der Anmeldung: 10.08.2005
(73) Patentinhaber: Giesecke & Devrient GmbH, 81677 München (DE)
(72) Erfinder: Finkenzeller, Klaus, 80939 München (DE)
(74) Vertreter: Klunker . Schmitt-Nilson . Hirsch

(56) Entgegenhaltungen:
- DE-A1- 10 217 632
- GB-A- 2 094 044
- US-A- 5 389 945
- US-A1- 2001 046 081
- US-A1- 2003 067 427
- BABAK KAVOOSSI: "ACTIVE IMAGING AND VISUAL INFORMATION ON PAPER AND PAPER-BASED PRODUCTS" 12. Dezember 2001 (2001-12-12), HELSINKI UNIVERSITY OF TECHNOLOGY,OTANIEMI,ESPOO , XP002328363 * Seite 1 - Seite 9 *
- CHIANG ET AL: "A stylus writable electrophoretic display device" SID INTERNATIONAL SYMPOSIUM. CHICAGO MAY 8-10 1979, CORAL GABLES, WINNER, US, Bd. SYMP. 10, Mai 1979 (1979-05), Seiten 44-45, XP002102514

## Beschreibung

Die Erfindung betrifft eine Chipkarte mit einer Anzeigevorrichtung zur veränderbaren Darstellung von Informationen. Weiterhin betrifft die Erfindung ein Verfahren zur Eingabe von Informationen in eine Chipkarte.

Zur Darstellung von Informationen ist es aus dem Stand der Technik bekannt, Chipkarten mit einer Anzeigevorrichtung auszustatten. Dabei kann die Anzeigevorrichtung jeweils insbesondere dazu dienen, in der Chipkarte gespeicherte Informationen, wie beispielsweise die Höhe eines Geldbetrags, für den Inhaber der Chipkarte sichtbar zu machen. Angesichts des geringen Bauraums, der bei einer Chipkarte für die Anzeigevorrichtung zur Verfügung steht und der hohen mechanischen Belastungen, denen eine Chipkarte bisweilen ausgesetzt ist, ist die Realisierung einer Chipkarte mit Anzeigevorrichtung mit großen Schwierigkeiten verbunden.

Weiterhin ist es bekannt, beispielsweise bei Zeitungen oder Büchern anstelle von konventionellem Papier elektronisches Papier zur Darstellung von Informationen einzusetzen. Das elektronische Papier weist eine Vielzahl kleiner Partikel auf, die mittels eines elektrischen Felds so positioniert oder orientiert werden, dass der von den Partikeln erzeugte optische Eindruck der gewünschten Information entspricht.

Die WO 00/36560 offenbart eine Chipkarte mit einer Ansteuervorrichtung und einer Anzeigevorrichtung zur veränderbaren Darstellung von Informationen, wobei die Anzeigevorrichtung als elektronisches Papier ausgeführt ist. Das Auslesen der Informationen erfolgt entweder durch das menschliche Auge oder durch einen optischen Leser.

Der Erfindung liegt die Aufgabe zugrunde, ein Wertdokument mit einer Anzeigevorrichtung so auszubilden, dass die Anzeigevorrichtung möglichst optimal nutzbar ist.

Diese Aufgabe wird durch eine Chipkarte mit der Merkmalskombination des Anspruchs 1 sowie ein Verfahren gemäß Anspruch 10 gelöst.

Die erfindungsgemäße Chipkarte weist eine Ansteuereinrichtung und eine Anzeigevorrichtung zur veränderbaren Darstellung von Informationen auf und zeichnet sich dadurch aus, dass der Informationsgehalt der Anzeigevorrichtung durch die auf der Karte angeordnete Ansteuereinrichtung elektrisch auslesbar ist.

Die Erfindung hat den Vorteil, dass die Anzeigevorrichtung aufgrund ihrer elektrischen Auslesbarkeit nicht nur zur Darstellung, sondern auch zur Eingabe von Informationen genutzt werden kann. Dadurch entfällt der Aufwand für eine zusätzliche Eingabekomponente, wie beispielsweise eines über der Anzeigevorrichtung angeordneten Touch-Panel Systems, für dessen Ansteuerung eine komplexe Sensorelektronik erforderlich ist. Ein weiterer Vorteil der Erfindung besteht darin, dass die Bauhöhe der Anzeigevorrichtung vergleichsweise gering ist. Dies ist angesichts der in der Regel geringen Dickenabmessungen von Chipkarten sehr wichtig. Weiterhin ist es von Vorteil, dass die erfindungsgemäß eingesetzte Anzeigevorrichtung im Gegensatz zu Touch-Panel Systemen, die eine stabile Glasoberfläche benötigen, sehr biegsam ist.

Die erfindungsgemäße Chipkarte weist eine Einrichtung zum Ansteuern der Anzeigevorrichtung auf. Die Lesefunktionalität kann auf einer Analyse elektrischer Eigenschaften der Anzeigevorrichtung beruhen, die mit den von der Anzeigevorrichtung dargestellten Informationen zusammenhängen. Insbesondere kann die Lesefunktionalität auf einer Analyse der Beeinflussung eines elektrischen Signals durch die Anzeigevorrichtung beruhen. Dies lässt sich mit sehr geringem Aufwand realisieren.

Die Ansteuereinrichtung kann weiterhin über eine Schreibfunktionalität zum Einschreiben von Informationen in die Anzeigevorrichtung verfügen, so dass ein internes Beschreiben der Anzeigevorrichtung möglich ist. Weiterhin kann die Anzeigevorrichtung auch extern beschreibbar sein, insbesondere dann, wenn die Ansteuereinrichtung außer Betrieb ist. Dies bedeutet, dass es nicht erforderlich ist, die Chipkarte zum Einschreiben von Informationen in die Anzeigevorrichtung in ein Endgerät einzuführen und dadurch in Betrieb zu nehmen. Dadurch wird eine manuelle Eingabe wesentlich vereinfacht und kann sehr flexibel durchgeführt werden.

Die Anzeigevorrichtung ist vorzugsweise so aufgebaut, dass sie eine Vielzahl von Steuerelektroden aufweist, wobei pro Steuerelektrode ein erstes Schaltelement zum Zuführen eines Schreib- oder Lesesignals zur Steuerelektrode und ein zweites Schaltelement zum Weiterleiten des Lesesignals nach Passieren der Steuerelektrode vorgesehen sein können. Damit lässt sich sowohl das Einschreiben als auch das Auslesen von Informationen zuverlässig durchführen. Weiterhin können erste elektrische Verbindungen vorgesehen sein, über die jeweils eine erste Gruppe der ersten Schaltelemente durchsteuerbar ist, und zweite elektrische Verbindungen, über die jeweils einer zweiten Gruppe der ersten Schaltelemente elektrische Signale zuführbar sind. Auf diese Weise ist eine individuelle Ansteuerung jeder einzelnen Steuerelektrode möglich. Schließlich kann eine dritte elektrische Verbindung vorgesehen sein, über welche die zweiten Schaltelemente miteinander verbunden sind. An der dritten elektrischen Verbindung können die Lesesignale nach Passieren der Steuerelektroden abgegriffen werden.

In einer vorteilhaften Ausgestaltung der erfindungsgemäßen Chipkarte weist dessen Oberfläche bereichsweise ein elektrisch leitendes Material auf, das elektrisch leitend mit einer Gegenelektrode der Anzeigevorrichtung verbunden ist. Dadurch wird das externe Beschreiben der Anzeigevorrichtung erleichtert, da die Ausbildung des für das Beschreiben benötigten elektrischen Felds optimiert wird.

Das erfindungsgemäße Verfahren zum Eingeben von Informationen in eine Chipkarte mit einer Ansteuereinrichtung und einer Anzeigevorrichtung zur veränderbaren Darstellung von Informationen, wobei die Anzeigevorrichtung als elektronisches Papier ausgeführt ist, zeichnet sich dadurch aus, dass der Informationsgehalt der Anzeigevorrichtung durch die auf der Karte angeordnete Ansteuereinrichtung elektrisch ausgelesen wird.

Das Einschreiben der Informationen in die Anzeigevorrichtung wird vorzugsweise zu einem Zeitpunkt durchgeführt, zu dem die Chipkarte nicht mit einem für den Betrieb der Chipkarte vorgesehen Endgerät verbunden ist. Zum Einschreiben der Informationen kann die Chipkarte auf einer elektrisch leitenden Unterlage positioniert werden. Dadurch wird eine definierte Ausbildung des für das Einschreiben benötigten elektrischen Felds begünstigt. Die Informationen werden vorzugsweise mittels eines Gegenstands zur Erzeugung eines elektrischen Felds in die Anzeigevorrichtung eingeschrieben, der insbesondere die Form eines Stifts aufweist. Damit lassen sich auf einfache Weise manuelle Eingaben durchführen und insbesondere auch Unterschriftsproben eingeben.

Die Chipkarte kann zur Auswertung des Informationsgehalts der Anzeigevorrichtung mit dem Endgerät verbunden werden. Auf diese Weise kann beispielsweise die für das elektrische Auslesen benötigte Spannungsversorgung hergestellt werden. In einem bevorzugten Ausführungsbeispiel werden zum elektrischen Auslesen der Anzeigevorrichtung elektrische Eigenschaften der Anzeigevorrichtung analysiert, die mit den eingeschriebenen Informationen zusammenhängen. Insbesondere werden lokale elektrische Eigenschaften einer Schicht der Anzeigevorrichtung analysiert, mit deren Hilfe die eingeschriebenen Informationen optisch dargestellt werden. Eine konkrete Vorgehensweise kann dabei darin bestehen, dass zum elektrischen Auslesen der Anzeigevorrichtung jeweils einer Steuerelektrode, die sich über einen Teilbereich der Anzeigevorrichtung erstreckt, ein elektrisches Signal zugeführt wird. Dabei kann es im Rahmen des erfindungsgemäßen Verfahrens vorgesehen sein, dass das elektrische Signal abhängig von den elektrischen Eigenschaften des Teilbereichs der Anzeigevorrichtung modifiziert wird. Das modifizierte elektrische Signal kann dann zur Ermittlung der in den Teilbereich der Anzeigevorrichtung eingeschriebenen Information ausgewertet werden.

Das erfindungsgemäße Verfahren eignet sich insbesondere dazu, eine Unterschrift zur Prüfung in die Chipkarte einzugeben. Dies hat den Vorteil, dass auf eine dauerhaft auf die Chipkarte aufgebrachte Referenzunterschrift verzichtet werden kann, die einem potentiellen Betrüger wichtige Informationen liefert.

Die Erfindung wird nachstehend anhand der in der Zeichnung dargestellten Ausführungsbeispiele erläutert.

Es zeigen:
- Fig. 1: ein Ausführungsbeispiel für eine erfindungsgemäß ausgebildete Chipkarte in Aufsicht,
- Fig. 2: das in Fig. 1 dargestellte Ausführungsbeispiel der Chipkarte in einer schematischen Schnittdarstellung, wobei die Schnittebene quer durch die Anzeigevorrichtung verläuft,
- Fig. 3: ein erstes Ausführungsbeispiel für die Anzeigevorrichtung in einer schematischen Schnittdarstellung,
- Fig. 4: ein zweites Ausführungsbeispiel für die Anzeigevorrichtung in einer Fig. 3 entsprechenden Darstellung,
- Fig. 5: ein Beispiel für die Beschaltung der Steuerelektroden in einer schema- tischen Aufsicht,
- Fig. 6: ein Ausführungsbeispiel einer Anordnung zum externen Beschreiben der Anzeigevorrichtung in einer schematischen Perspektivdarstellung und
- Fig. 7: ein Ausführungsbeispiel für die Beschaltung der Steuerelektroden in einer Fig. 5 entsprechenden Darstellung.

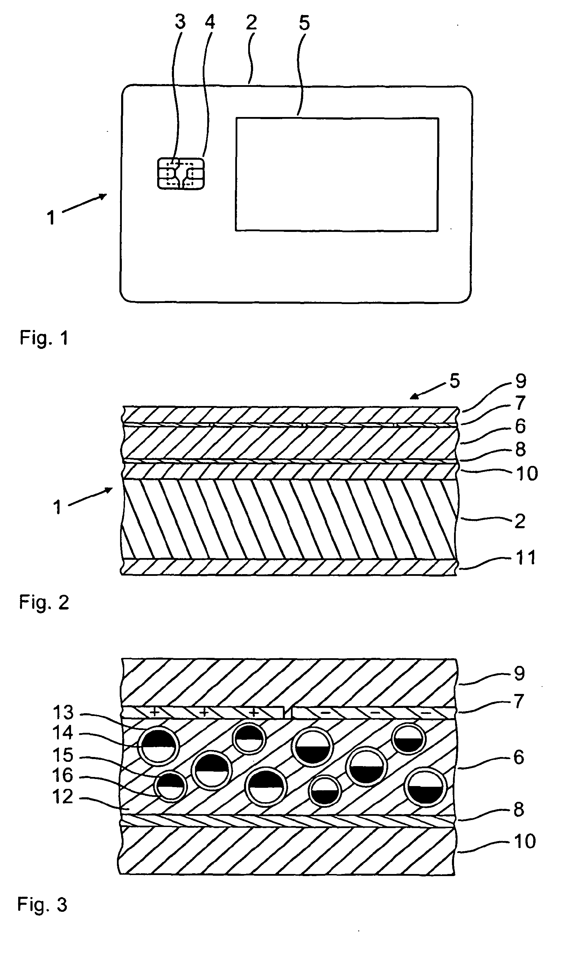

Fig. 1 zeigt ein Ausführungsbeispiel für eine erfindungsgemäß ausgebildete Chipkarte 1 in Aufsicht. Die Chipkarte 1 weist einen Kartenkörper 2 auf, der beispielsweise aus einem Kunststoffmaterial gefertigt ist. Der Kartenkörper 2 ist mit einem integrierten Schaltkreis 3 bestückt, der mit einem Kontaktfeld 4 auf einer im Folgenden als Vorderseite bezeichneten Hauptfläche der Chipkarte 1 elektrisch leitend verbunden ist. Über das Kontaktfeld 4 kann dem integrierten Schaltkreis 3 insbesondere eine Betriebsspannung zugeführt werden und ein Datenaustausch mit dem integrierten Schaltkreis 3 durchgeführt werden. Anstelle des Kontaktfelds 4 oder zusätzlich zum Kontaktfeld 4 kann auch eine figürlich nicht dargestellte Antenne zur kontaktlosen Energieübertragung und zum kontaktlosen Datenaustausch vorgesehen sein. Als ein weiteres Funktionselement weist die Chipkarte 1 eine Anzeigevorrichtung 5 auf, die in Form eines Streifens aus einem elektronischen Papier auf der Vorderseite der Chipkarte 1 auf den Kartenkörper 2 appliziert ist. Aufbau und Funktionsweise des elektronischen Papiers werden im Folgenden noch erläutert.

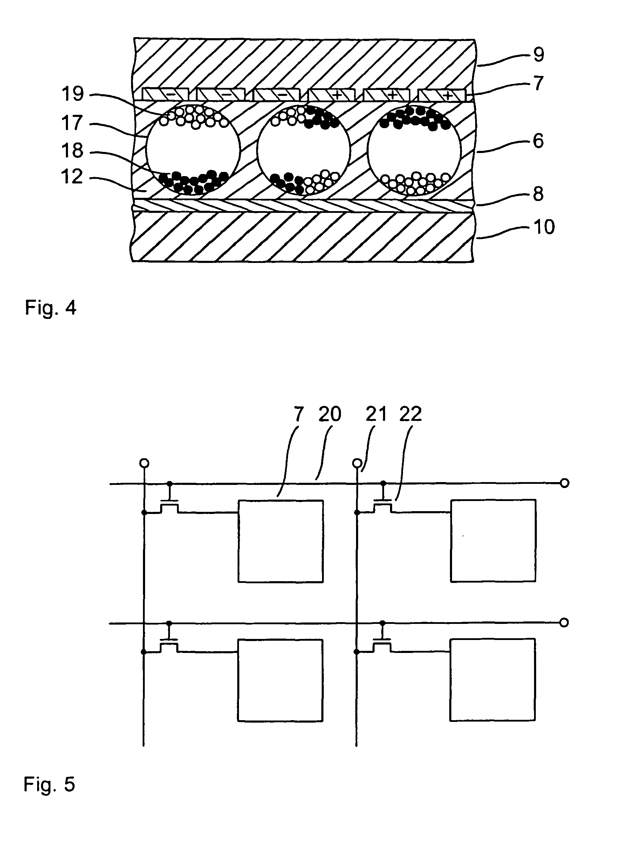

Fig. 2 zeigt das in Fig. 1 dargestellte Ausführungsbeispiel der Chipkarte 1 in einer schematischen Schnittdarstellung, wobei die Schnittebene quer durch die Anzeigevorrichtung 5 verläuft. Dargestellt ist lediglich ein Teilbereich der Chipkarte 1, wobei aus Gründen der Anschaulichkeit von einer maßstäblichen Darstellung abgesehen wurde. Die Anzeigevorrichtung 5 weist eine aktive Schicht 6 auf, die zwischen einem Satz von Steuerelektroden 7 und einer Gegenelektrode 8 angeordnet ist. Ausführung und Funktionsweise der aktiven Schicht 6 werden anhand der Fig. 3 und 4 erläutert. Zum Schutz vor äußeren mechanischen Einwirkungen sind die Steuerelektroden 7 von einer transparenten Deckschicht 9 abgedeckt. Die Gegenelektrode 8 ist durch eine Trägerschicht 10 vom Kartenkörper 2 getrennt, wobei die Trägerschicht 10 auch entfallen kann. Auf der Rückseite der Chipkarte 1 weist der Kartenkörper 2 optional eine elektrisch leitende Beschichtung 11 auf, die mit der Gegenelektrode 8 leitend verbunden ist. Die Beschichtung 11 kann beispielsweise als eine elektrisch leitende Farbe ausgebildet sein, die auf den Kartenkörper 2 aufgedruckt ist.

Fig. 3 zeigt ein erstes Ausführungsbeispiels für die Anzeigevorrichtung 5 in einer schematischen Schnittdarstellung. Bei diesem Ausführungsbeispiel besteht die aktive Schicht 6 aus einem Elastomermaterial 12, in dem eine Vielzahl kugelförmiger Hohlräume 13 ausgebildet ist. Jeder Hohlraum 13 ist mit Silikonöl gefüllt und enthält eine zweifarbige Kugel 14, wobei beispielsweise eine erste Kugelhälfte 15 schwarz und eine zweite Kugelhälfte 16 weiß gefärbt ist. Dabei weisen die beiden Kugelhälften 15 und 16 jeweils unterschiedliche elektrische Ladungen auf. Wenn mittels der Steuerelektroden 7 und der Gegenelektrode 8 ein elektrisches Feld in der aktiven Schicht 6 erzeugt wird, richten sich die Kugeln 14 am elektrischen Feld aus, so dass abhängig von der Richtung des elektrischen Felds entweder die schwarzen Kugelhälften 15 oder die weißen Kugelhälften 16 zur Gegenelektrode 8 hin weisen und somit von außen sichtbar sind. In der Darstellung der Fig. 3 weisen im Bereich der positiv geladenen Steuerelektrode 7 die schwarzen Kugelhälften 15 und im Bereich der negativ geladenen Steuerelektrode 7 die weißen Kugelhälften 16 zur Steuerelektrode 7 hin. Die Ausrichtung der Kugeln 14 wird durch eine drehbare Lagerung im Silikonöl ermöglicht und bleibt auch nach dem Abschalten des elektrischen Felds erhalten. Da je eine einzelne Kugel 14 oder eine Gruppe von Kugeln 14 ein Pixel darstellt, das jeweils über eine der Steuerelektroden 7 einzeln ansteuerbar ist, kann durch eine entsprechende elektrische Ansteuerung der Steuerelektroden 7 ein beliebiges Pixelmuster dargestellt werden.

Fig. 4 zeigt ein zweites Ausführungsbeispiel für die Anzeigevorrichtung 5 in einer Fig. 3 entsprechenden Darstellung. Beim zweiten Ausführungsbeispiel ist in der aktiven Schicht 6, die wiederum aus dem Elastomermaterial 12 bestehen kann, eine Vielzahl von Mikrokapseln 17 angeordnet. Die Mikrokapseln 17 können mit Silikonöl gefüllt sein und weisen jeweils schwarze Pigmentteilchen 18 und weiße Pigmentteilchen 19 auf, die unterschiedliche Ladungen besitzen. Dementsprechend wandern die schwarzen Pigmentteilchen 18 und die weißen Pigmentteilchen 19 beim Erzeugen eines elektrischen Felds zwischen den Steuerelektroden 7 und der Gegenelektrode 8 in entgegengesetzte Bereiche der jeweiligen Mikrokapsel 17. Dabei sind jeweils nur die Pigmentteilchen 18 oder 19 von außen sichtbar, die zu den Steuerelektroden 7 wandern. Bei der in Fig. 4 in der Mitte dargestellten Mikrokapsel 17 werden verschiedene Bereiche derselben Mikrokapsel 17 unterschiedlichen elektrischen Feldern ausgesetzt. Dies führt zu unterschiedlichen Bewegungsrichtungen gleichartiger Pigmentteilchen 18 bzw. 19 innerhalb derselben Mikrokapsel 17. Dieser Effekt kann zur Erhöhung der Auflösung genutzt werden.

Im Ergebnis wird auch beim zweiten Ausführungsbeispiel der aktiven Schicht 6 ein von der elektrischen Ansteuerung der Steuerelektroden 7 abhängiges Pixelmuster erzeugt. Ohne die Einwirkung elektrischer Felder bleibt dieses Pixelmuster unverändert erhalten. Die Ansteuerung der Steuerelektroden 7 zur Erzeugung eines gewünschten Pixelmusters wird anhand von Fig. 5 erläutert.

Fig. 5 zeigt ein Beispiel für die Beschaltung der Steuerelektroden 7 in einer schematischen Aufsicht. Die Steuerelektroden 7 weisen jeweils eine rechteckige Form auf und sind zu einer Matrix gruppiert, wobei innerhalb jeder Zeile der Matrix eine Auswahlleitung 20 und innerhalb jeder Spalte eine Datenleitung 21 in geringem Abstand von den Steuerelektroden 7 verläuft. Jede Steuerelektrode 7 ist über je einen Schreibtransistor 22 an eine der Datenleitungen 21 angeschlossen, so dass es vom Schaltzustand der Schreibtransistoren 22 abhängt, ob gegebenenfalls an den Datenleitungen 21 anliegende Signale die Steuerelektroden 7 jeweils erreichen. Der Schaltzustand der Schreibtransistoren 22 wird über die Auswahlleitungen 20 beeinflusst, die jeweils an den Gates sämtlicher Schreibtransistoren 22 einer Zeile angeschlossen sind. Dies bedeutet, dass über die Auswahlleitungen 20 jeweils sämtliche Schreibtransistoren 22 einer Zeile entweder gesperrt oder durchgeschaltet werden können und dementsprechend festgelegt wird, welche Zeile jeweils über die Datenleitungen 21 beschrieben werden kann.

Um beispielsweise ein gewünschtes Pixel schwarz darzustellen, wird auf die aktive Schicht 6 der Anzeigevorrichtung 5 an der gewünschten Stelle so eingewirkt, dass dort die schwarzen Kugelhälften 15 bzw. die schwarzen Pigmentteilchen 18 sichtbar werden. Um dies zu erreichen, ist es erforderlich, bei der zugehörigen Steuerelektrode 7 einen bestimmten Ladungszustand zu erzeugen. Hierzu wird zunächst die Zeile des gewünschten Pixels durch Anlegen einer Spannung an die zugehörige Auswahlleitung 20 ausgewählt. Dadurch werden alle Schreibtransistoren 22 dieser Zeile durchgeschaltet und auf diese Weise sämtliche Steuerelektroden 7 dieser Zeile mit den jeweils zugehörigen Datenleitungen 21 verbunden. Dann wird an die Datenleitung, 21 die der Spalte des gewünschten Pixels zugeordnet ist, eine Spannung angelegt und über den zuvor durchgeschalteten Schreibtransistor 22 der Steuerelektrode 7 zugeführt. Soll das gewünschte Pixel stattdessen weiß dargestellt werden, so wird diese Vorgehensweise lediglich dahingehend abgewandelt, dass der Steuerelektrode 7 eine umgekehrt gepolte Spannung zugeführt wird. In entsprechender Weise können jeweils gleichzeitig alle Steuerelektroden 7 einer Zeile angesteuert werden. Die Ansteuerung der Steuerelektroden 7 über die Auswahlleitungen 20 und die Datenleitungen 21 wird jeweils vom integrierten Schaltkreis 3 durchgeführt, der auf diese Weise Informationen auf der Anzeigevorrichtung 5 darstellen kann.

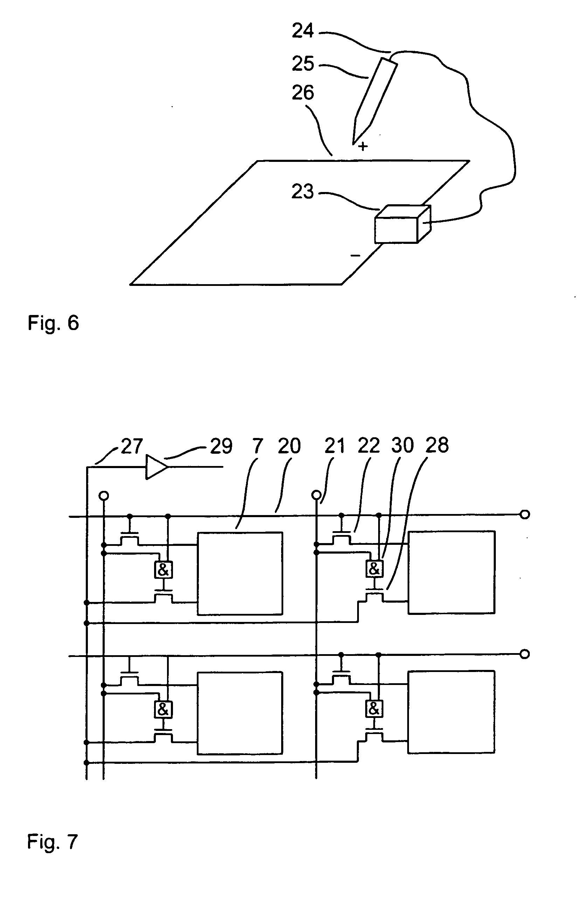

Neben der vorstehend beschriebenen internen Ansteuerung der Anzeigevorrichtung 5 mittels des integrierten Schaltkreises 3, ist auch eine externe Beeinflussung der Anzeigevorrichtung 5 möglich und im Rahmen der Erfindung von besonderem Interesse. Dies wird anhand von Fig. 6 erläutert.

Fig. 6 zeigt ein Ausführungsbeispiel einer Anordnung zum externen Beschreiben der Anzeigevorrichtung 5 in einer schematischen Perspektivdarstellung. Die Anordnung weist eine Spannungsquelle 23 auf, die über ein Anschlusskabel 24 mit einem Stift 25 verbunden ist. Weiterhin ist eine Metallplatte 26 vorgesehen, die ebenfalls an die Spannungsquelle 23 angeschlossen ist. Die Spannungsquelle 23 ist so gepolt, dass der Stift 25 auf positivem und die Metallplatte 26 auf negativem Potential liegt. Zum Beschreiben der Anzeigevorrichtung 5 der Chipkarte 1, beispielsweise zum Leisten einer Unterschrift, wird die Chipkarte 1 mit ihrer Rückseite auf die Metallplatte 26 gelegt, so dass die Beschichtung 11 an der Metallplatte 26 anliegt und damit entsprechend der Metallplatte 26 auf negativem Potential liegt. Dadurch wird auch die mit der Beschichtung 11 elektrisch leitend verbundene Gegenelektrode 8 auf negatives Potential gelegt. Anschließend wird der Stift 25 mit seiner Spitze über die Anzeigevorrichtung 5 geführt. Das dabei zwischen dem Stift 25 und der Gegenelektrode 8 ausgebildete elektrische Feld führt zu einer lokalen Ausrichtung der Kugeln 14 bzw. zu einer Wanderung der Pigmentteilchen 18 und 19 in der aktiven Schicht 6, so dass der Schriftzug auf der Anzeigevorrichtung 5 optisch sichtbar wird. Da das elektrische Feld dabei mit externen Mitteln erzeugt wird und für eine Konservierung der auf der Anzeigevorrichtung 5 angezeigten Informationen keine Betriebsspannung erforderlich ist, ist es möglich, die Anzeigevorrichtung 5 zu beschreiben, während die Chipkarte 1 nicht mit einem Chipkartenleser verbunden und damit außer Betrieb ist. Nach Fertigstellung des Schriftzugs wird die Chipkarte 1 in den Chipkartenleser eingeführt und damit in Betrieb genommen, um eine Auswertung des manuell erstellten Schriftzugs zu veranlassen.

Die Auswertung kann beispielsweise darin bestehen, dass der Schriftzug mit einem im integrierten Schaltkreis 3 der Chipkarte 1 gespeicherten Referenzwert für die Unterschrift des rechtmäßigen Inhabers der Chipkarte 1 verglichen wird. Hierzu ist es erforderlich, die Informationen über den Schriftzug, der auf der Anzeigevorrichtung 5 dargestellt ist, dem integrierten Schaltkreis 3 der Chipkarte 1 zugänglich zu machen. Dies erfolgt erfindungsgemäß dadurch, dass die Anzeigevorrichtung 5 vom integrierten Schaltkreis 3 elektrisch ausgelesen wird. Ein elektrisches Auslesen ist möglich, da die optische Information der Anzeigevorrichtung 5 mit der Struktur der Ladungsverteilung in der aktiven Schicht 6 korreliert. Allerdings ist es zum elektrischen Auslesen der Anzeigevorrichtung 5 erforderlich, das in Fig. 5 dargestellte Beispiel für die Beschaltung der Steuerelektroden 7 so weiterzubilden, dass die elektrischen Eigenschaften der aktiven Schicht 6 im Bereich jeder Steuerelektrode 7 ermittelt werden können. Eine derartige Weiterbildung ist in Fig. 7 dargestellt.

Fig. 7 zeigt eine schematische Darstellung eines Ausführungsbeispiels für die Beschaltung der Steuerelektroden 7 in einer Fig. 5 entsprechenden Darstellung. Das Ausführungsbeispiel zeichnet sich dadurch aus, dass es ein elektrisches Auslesen der von der Anzeigevorrichtung 5 angezeigten Information ermöglicht, und zwar unabhängig davon, ob die Anzeigevorrichtung 5 vom integrierten Schaltkreis 3 der Chipkarte 1 oder extern beschrieben wurde. Zusätzlich zu den Komponenten des Beispiels in Fig. 5 ist beim Ausführungsbeispiel eine Leseleitung 27 vorgesehen, die über je einen Lesetransistor 28 an jede einzelne Steuerelektrode 7 angeschlossen ist und die mit einem Leseverstärker 29 verbunden ist. Die Lesetransistoren 28 werden jeweils über ein UND-Gatter 30 angesteuert, dessen Eingänge mit der zur jeweiligen Steuerelektrode 7 zugehörigen Auswahlleitung 20 und Datenleitung 21 verbunden sind. Ein Lesetransistor 28 ist somit immer dann durchgeschaltet, wenn sowohl an der zugehörigen Auswahlleitung 20 als auch an der zugehörigen Datenleitung 21 ein geeigneter Spannungspegel anliegt.

Zum Auslesen eines Pixels wird an die Auswahlleitung 20 der zugehörigen Zeile analog zum Schreibvorgang eine Spannung angelegt. Weiterhin wird in die Datenleitung 21 der zugehörigen Spalte ein Leseimpuls eingespeist. Der Leseimpuls gelangt über den durchgeschalteten Schreibtransistor 22 zur Steuerelektrode 7 des ausgewählten Pixels und wird abhängig von den elektrischen Eigenschaften der aktiven Schicht 6 im Bereich dieser Steuerelektrode 7 verformt. Über das UND-Gatter 30 wird der Lesetransistor 28 der Steuerelektrode 7 durchgeschaltet, so dass der verformte Leseimpuls über den Lesetransistor 28 und über die Leseleitung 27 dem Leseverstärker 29 zugeführt wird. Nach einer Verstärkung durch den Leseverstärker 29 wird der verformte Leseimpuls ausgewertet.

Eine alternative Möglichkeit zum Auslesen des Inhalts des Displays basiert auf der Schaltung aus Fig. 5. Hierbei werden die Datenleitungen 21 um eine Meßvorrichtung erweitert, die es erlaubt, beim Anlegen eines Leseimpulses an die Datenleitung 21 den verlauf des Stromes I in der Datenleitung 21 zu ermitteln. Der Strom I wird beim Anlegen eines Leseimpulses, abhängig von den elektrischen Eigenschaften der aktiven Schicht 6 im Bereich der Steuerelektrode 7, eine unterschiedliche Stärke und ggf. einen unterschiedlichen zeitlichen Verlauf aufweisen.

Im Rahmen der Auswertung des Stromverlaufs I(t) wird auf den Zustand der aktiven Schicht 6 im Bereich der Steuerelektrode 7 des ausgewählten Pixels geschlossen und dadurch der optische Informationsgehalt der Anzeigevorrichtung 5 an dieser Stelle ermittelt. Dabei kann sowohl die Erzeugung des Leseimpulses als auch dessen Verstärkung und Auswertung jeweils vom integrierten Schaltkreis 3 der Chipkarte 1 durchgeführt werden. Um den gesamten Informationsgehalt der Anzeigevorrichtung 5 auszulesen, wird der Leseimpuls sukzessive an sämtliche Datenleitungen 21 angelegt und jeweils ausgewertet. Diese Vorgehensweise wird für alle Zeilen durchgeführt, wobei durch Anlegen einer Spannung an die entsprechende Auswahlleitung 20 jeweils eine Zeile ausgewählt wird. Als Ergebnis entsteht im integrierten Schaltkreis 3 der Chipkarte 1 ein beispielsweise als Bitmap gespeichertes Abbild der von der Anzeigevorrichtung 5 optisch dargestellten Informationen.

Auf die vorstehend beschriebene Weise kann zum Beispiel eine mit Hilfe der in Fig. 6 dargestellten Anordnung vom Inhaber der Chipkarte 1 auf die Anzeigevorrichtung 5 aufgebrachte Unterschrift vom integrierten Schaltkreis 3 der Chipkarte 1 ausgelesen und durch Vergleich mit einer gespeicherten Referenz auf ihre Echtheit hin überprüft werden. Dadurch ist es nicht mehr erforderlich, die Unterschrift des rechtmäßigen Inhabers als Referenz für eine manuelle Prüfung dauerhaft auf die Chipkarte 1 aufzubringen. Ein potentieller Betrüger hat somit keine Kenntnis vom Aussehen der Referenzunterschrift, so dass eine betrügerische Verwendung der Chipkarte 1 bei Anwendungen, bei denen eine Unterschrift zu leisten ist, wesentlich erschwert wird. Die Eingabefunktion der erfindungsgemäß ausgebildeten Anzeigevorrichtung 5 kann zudem auch für die Eingabe sonstiger Angaben verwendet werden.

In manchen Fällen kann es erforderlich sein, den vorstehend beschriebenen Lesevorgang abzuwandeln. So kann die aktive Schicht 6 der Anzeigevorrichtung 5 je nach ihrer Ausgestaltung und abhängig von der Art des verwendeten Leseimpulses beim elektrischen Auslesen so beeinflusst werden, dass sich der Informationsgehalt ändert. Wenn eine derartige Situation vorliegt, wird unmittelbar im Anschluss an den Lesevorgang ein Schreibvorgang durchgeführt, durch den der ausgelesene Informationsgehalt wieder eingeschrieben wird und dadurch der ursprüngliche Zustand der Anzeigevorrichtung 5 wiederhergestellt wird.

### Bezugszeichenliste

- 1: Chipkarte
- 2: Kartenkörper
- 3: integrierter Schaltkreis
- 4: Kontaktfeld
- 5: Anzeigevorrichtung
- 6: aktive Schicht
- 7: Steuerelektrode
- 8: Gegenelektrode
- 9: Deckschicht
- 10: Trägerschicht
- 11: elektrisch leitende Beschichtung
- 12: Elastomermaterial
- 13: Hohlraum
- 14: Kugel
- 15: schwarze Kugelhälfte
- 16: weiße Kugelhälfte
- 17: Mikrokapsel
- 18: schwarze Pigmentteilchen
- 19: weiße Pigmentteilchen
- 20: Auswahlleitung
- 21: Datenleitung
- 22: Schreibtransistor
- 23: Spannungsquelle
- 24: Anschlusskabel
- 25: Stift
- 26: Metallplatte
- 27: Leseleitung
- 28: Lesetransistor
- 29: Leseverstärker
- 30: UND-Gatter

## Patentansprüche

1. Chipkarte mit einer Ansteuereinrichtung (3) und einer Anzeigevorrichtung (5) zur veränderbaren Darstellung von Informationen, wobei die Anzeigevorrichtung (5) als elektronisches Papier ausgeführt ist, **dadurch gekennzeichnet, dass** der Informationsgehalt der Anzeigevorrichtung (5) durch die auf der Chipkarte angeordnete Ansteuereinrichtung (3) elektrisch auslesbar ist.

2. Chipkarte nach Anspruch 1, **dadurch gekennzeichnet, dass** die Lesefunktionalität auf einer Analyse elektrischer Eigenschaften der Anzeigevorrichtung (5) beruht, die mit den von der Anzeigevorrichtung (5) dargestellten Informationen zusammenhängen.

3. Chipkarte nach einem der Ansprüche 1 oder 2, **dadurch gekennzeichnet, dass** die Lesefunktionalität auf einer Analyse der Beeinflussung eines elektrischen Signals durch die Anzeigevorrichtung (5) beruht.

4. Chipkarte nach einem der Ansprüche 1 bis 3, **dadurch gekennzeichnet, dass** die Ansteuereinrichtung (3) über eine Schreibfunktionalität zum Einschreiben von Informationen in die Anzeigevorrichtung (5) verfügt.

5. Chipkarte nach einem der vorhergehenden Ansprüche, **dadurch gekennzeichnet, dass** die Anzeigevorrichtung (5) extern beschreibbar ist, insbesondere dann, wenn die Ansteuereinrichtung (3) außer Betrieb ist.

6. Chipkarte nach einem der vorhergehenden Ansprüche, **dadurch gekennzeichnet, dass** die Anzeigevorrichtung (5) eine Vielzahl von Steuerelektroden (7) aufweist, wobei pro Steuerelektrode (7) ein erstes Schaltelement (22) zum Zuführen eines Schreib- oder Lesesignals zur Steuerelektrode (7) und ein zweites Schaltelement (28) zum Weiterleiten des Lesesignals nach Passieren der Steuerelektrode (7) vorgesehen sind.

7. Chipkarte nach Anspruch 6, **dadurch gekennzeichnet, dass** erste elektrische Verbindungen (20) vorgesehen sind, über die jeweils eine erste Gruppe der ersten Schaltelemente (22) durchsteuerbar ist, und zweite elektrische Verbindungen (21), über die jeweils einer zweiten Gruppe der ersten Schaltelemente (22) elektrische Signale zuführbar sind.

8. Chipkarte nach einem der Ansprüche 6 oder 7, **dadurch gekennzeichnet, dass** eine dritte elektrische Verbindung (27) vorgesehen ist, über welche die zweiten Schaltelemente (28) miteinander verbunden sind.

9. Chipkarte nach einem der vorhergehenden Ansprüche, **dadurch gekennzeichnet, dass** seine Oberfläche bereichsweise ein elektrisch leitendes Material (11) aufweist, das elektrisch leitend mit einer Gegenelektrode (8) der Anzeigevorrichtung (5) verbunden ist.

10. Verfahren zum Eingeben von Informationen in eine Chipkarte (1) ausgestaltet mit einer Ansteuereinrichtung (3) und einer Anzeigevorrichtung (5) zur veränderbaren Darstellung von Informationen, wobei die Anzeigevorrichtung (5) als elektronisches Papier ausgeführt ist, **dadurch gekennzeichnet, dass** der Informationsgehalt der Anzeigevorrichtung (5) durch die auf der Karte angeordnete Ansteuereinrichtung (3) elektrisch ausgelesen wird.

11. Verfahren nach Anspruch 10, **dadurch gekennzeichnet, dass** die Informationen in die Anzeigevorrichtung (5) der Chipkarte (1) eingeschrieben werden.

12. Verfahren nach einem der Ansprüche 10 oder 11, **dadurch gekennzeichnet, dass** das Einschreiben der Informationen in die Anzeigevorrichtung (5) zu einem Zeitpunkt durchgeführt wird, zu dem die Chipkarte (1) nicht mit einem für den Betrieb der Chipkarte (1) vorgesehenen Endgerät verbunden ist.

13. Verfahren nach einem der Ansprüche 10 bis 12, **dadurch gekennzeichnet, dass** die Chipkarte (1) zum Einschreiben der Informationen auf einer elektrisch leitenden Unterlage (26) positioniert wird.

14. Verfahren nach einem der Ansprüche 10 bis 13, **dadurch gekennzeichnet, dass** die Informationen mittels eines Gegenstands (25) zur Erzeugung eines elektrischen Felds in die Anzeigevorrichtung (5) eingeschrieben werden, der insbesondere die Form eines Stifts aufweist.

15. Verfahren nach einem der Ansprüche 10 bis 14, **dadurch gekennzeichnet, dass** die Chipkarte (1) zur Auswertung des Informationsgehalts der Anzeigevorrichtung (5) mit einem Endgerät verbunden wird.

16. Verfahren nach einem der Ansprüche 10 bis 15, **dadurch gekennzeichnet, dass** zum elektrischen Auslesen der Anzeigevorrichtung (5) elektrische Eigenschaften der Anzeigevorrichtung (5) analysiert werden, die mit den eingeschriebenen Informationen zusammenhängen.

17. Verfahren nach Anspruch 16, **dadurch gekennzeichnet, dass** lokale elektrische Eigenschaften einer Schicht (6) der Anzeigevorrichtung (5) analysiert werden, mit deren Hilfe die eingeschriebenen Informationen optisch dargestellt werden.

18. Verfahren nach einem der Ansprüche 10 bis 17, **dadurch gekennzeichnet, dass** zum elektrischen Auslesen der Anzeigevorrichtung (5) jeweils einer Steuerelektrode (7), die sich über einen Teilbereich der Anzeigevorrichtung (5) erstreckt, ein elektrisches Signal zugeführt wird.

19. Verfahren nach Anspruch 18, **dadurch gekennzeichnet, dass** das elektrische Signal abhängig von den elektrischen Eigenschaften des Teilbereichs der Anzeigevorrichtung (5) modifiziert wird.

20. Verfahren nach Anspruch 19, **dadurch gekennzeichnet, dass** das modifizierte elektrische Signal zur Ermittlung der in den Teilbereich der Anzeigevorrichtung (5) eingeschriebenen Information ausgewertet wird.

21. Verfahren nach einem der Ansprüche 10 bis 20, **dadurch gekennzeichnet, dass** eine Unterschrift zur Prüfung in die Chipkarte (1) eingegeben wird.

## Claims

1. A chip card having a driving device (3) and a display device (5) for variable representation of information, the display device (5) being executed as electronic paper, **characterized in that** the information content of the display device (5) is electrically readable by the driving device (3) disposed on the chip card.

2. The chip card according to claim 1, **characterized in that** the reading functionality is based on an analysis of electrical properties of the display device (5) which are related to the information represented by the display device (5).

3. The chip card according to either of claims 1 to 2, **characterized in that** the reading functionality is based on an analysis of the influencing of an electrical signal by the display device (5).

4. The chip card according to any of claims 1 to 3, **characterized in that** the driving device (3) has a writing functionality for writing information to the display device (5).

5. The chip card according to any of the previous claims, **characterized in that** the display device (5) is externally writable, in particular when the driving device is (3) out of operation.

6. The chip card according to any of the previous claims, **characterized in that** the display device (5) has a multiplicity of control electrodes (7), there being provided per control electrode (7) a first switching element (22) for supplying a write signal or read signal to the control electrode (7) and a second switching element (28) for forwarding the read signal after passing the control electrode (7).

7. The chip card according to claim 6, **characterized in that** first electrical connections (20) are provided for respectively turning on a first group of the first switching elements (22), and second electrical connections (21) for respectively supplying electrical signals to a second group of the first switching elements (22).

8. The chip card according to either of claims 6 to 7, **characterized in that** a third electrical connection (27) is provided for interconnecting the second switching elements (28).

9. The chip card according to any of the previous claims, **characterized in that** its surface has in certain areas an electroconductive material (11) which is connected electroconductively to a counter-electrode (8) of the display device (5).

10. A method for inputting information to a chip card (1) equipped with a driving device (3) and a display device (5) for variable representation of information, the display apparatus (5) being executed as electronic paper, **characterized in that** the information content of the display device (5) is read out electrically by the driving device (3) disposed on the card.

11. The method according to claim 10, **characterized in that** the information is written to the display device (5) of the chip card (1).

12. The method according to either of claims 10 to 11, **characterized in that** the writing of the information to the display device (5) is carried out at a time when the chip card (1) is not connected to a terminal provided for operation of the chip card (1).

13. The method according to any of claims 10 to 12, **characterized in that** for writing the information the chip card (1) is positioned on an electroconductive base (26).

14. The method according to any of claims 10 to 13, **characterized in that** the information is written to the display device (5) by means of an object (25) for generating an electrical field, said object having in particular the form of a pen.

15. The method according to any of claims 10 to 14, **characterized in that** for evaluating the information content of the display device (5) the chip card (1) is connected to a terminal.

16. The method according to any of claims 10 to 15, **characterized in that** for electrically reading out the display device (5), electrical properties of the display device (5) are analyzed which are related to the written information.

17. The method according to claim 16, **characterized in that** local electrical properties of a layer (6) of the display device (5) are analyzed by means of which the written information is represented optically.

18. The method according to any of claims 10 to 17, **characterized in that** for electrically reading out the display device (5) an electrical signal is supplied in each case to a control electrode (7) which extends over a partial area of the display device (5).

19. The method according to claim 18, **characterized in that** the electrical signal is modified in dependence on the electrical properties of the partial area of the display device (5).

20. The method according to claim 19, **characterized in that** the modified electrical signal is evaluated for determining the information written to the partial area of the display device (5).

21. The method according to any of claims 10 to 20, **characterized in that** a signature is input to the chip card (1) for checking purposes.

## Revendications

1. Carte à puce comportant un mécanisme de commande (3) et un dispositif d'affichage (5) pour la représentation modifiable d'informations, le dispositif d'affichage (5) étant réalisé sous forme de papier électronique, **caractérisée en ce que** le contenu informationnel du dispositif d'affichage (5) est lisible électriquement au moyen du mécanisme de commande (3) disposé sur la carte à puce.

2. Carte à puce selon la revendication 1, **caractérisée en ce que** la fonctionnalité de lecture consiste en une analyse de propriétés électriques du dispositif d'affichage (5) qui sont en rapport avec les informations représentées par le dispositif d'affichage (5).

3. Carte à puce selon une des revendications 1 ou 2, **caractérisée en ce que** la fonctionnalité de lecture consiste en une analyse de l'influence exercée par le dispositif d'affichage (5) sur un signal électrique.

4. Carte à puce selon une des revendications 1 ou 3, **caractérisée en ce que** le mécanisme de commande (3) dispose d'une fonctionnalité d'écriture pour écrire des informations dans le dispositif d'affichage (5).

5. Carte à puce selon une des revendications précédentes, **caractérisée en ce que** le dispositif d'affichage (5) est extérieurement inscriptible, notamment quand le mécanisme de commande (3) est hors de fonctionnement.

6. Carte à puce selon une des revendications précédentes, **caractérisée en ce que** le dispositif d'affichage (5) comporte un grand nombre d'électrodes de commande (7), un premier élément de commutation (22) destiné à faire parvenir un signal d'écriture ou de lecture à l'électrode de commande (7) et un deuxième élément de commutation (28) destiné à acheminer le signal de lecture après son passage par l'électrode de commande (7) étant prévus par électrode de commande (7).

7. Carte à puce selon la revendication 6, **caractérisée en ce qu'**il est prévu des premières connexions électriques (20) par l'intermédiaire desquelles respectivement un premier groupe des premiers éléments de commutation (22) peut être commandé, et des deuxièmes connexions électriques (21) par l'intermédiaire desquelles des signaux électriques peuvent être amenés à respectivement un deuxième groupe des premiers éléments de commutation (22).

8. Carte à puce selon une des revendications 6 ou 7, **caractérisée en ce qu'**une troisième connexion électrique (27) est prévue, par l'intermédiaire de laquelle les deuxièmes éléments de commutation (28) sont reliés les uns aux autres.

9. Carte à puce selon une des revendications précédentes, **caractérisée en ce que** sa surface comporte en certaines zones un matériau électroconducteur (11) relié de manière électroconductrice à une contre-électrode (8) du dispositif d'affichage (5).

10. Procédé d'entrée d'informations dans une carte à puce (1) équipée d'un mécanisme de commande (3) et d'un dispositif d'affichage (5) pour la représentation modifiable d'informations, le dispositif d'affichage (5) étant réalisé sous forme de papier électronique, **caractérisé en ce que** le contenu informationnel du dispositif d'affichage (5) est lu électriquement au moyen du mécanisme de commande (3) disposé sur la carte.

11. Procédé selon la revendication 10, **caractérisé en ce que** les informations sont écrites dans le dispositif d'affichage (5) de la carte à puce (1).

12. Procédé selon une des revendications 10 ou 11, **caractérisé en ce que** l'écriture des informations dans le dispositif d'affichage (5) est effectuée à un moment où la carte à puce (1) n'est pas connectée avec un terminal prévu pour le fonctionnement de la carte à puce (1).

13. Procédé selon une des revendications de 10 à 12, **caractérisé en ce que**, pour l'écriture des informations, la carte à puce (1) est positionnée sur un support électroconducteur (26).

14. Procédé selon une des revendications de 10 à 13, **caractérisé en ce que** les informations sont écrites dans le dispositif d'affichage (5) au moyen d'un objet (25) destiné à générer un champ électrique et présentant notamment la forme d'une goupille.

15. Procédé selon une des revendications de 10 à 14, **caractérisé en ce que** la carte à puce (1) est connectée à un terminal pour le dépouillement du contenu informationnel du dispositif d'affichage (5).

16. Procédé selon une des revendications de 10 à 15, **caractérisé en ce que**, pour la lecture électrique du dispositif d'affichage (5), des propriétés électriques du dispositif d'affichage (5) qui sont en rapport avec les informations écrites sont analysées.

17. Procédé selon la revendication 16, **caractérisé en ce que** des propriétés électriques locales d'une couche (6) du dispositif d'affichage (5) à l'aide desquelles les informations écrites sont représentées optiquement sont analysées.

18. Procédé selon une des revendications de 10 à 17, **caractérisé en ce que**, pour la lecture électrique du dispositif d'affichage (5), un signal électrique est amené à respectivement une électrode de commande (7) s'étendant sur une zone partielle du dispositif d'affichage (5).

19. Procédé selon la revendication 18, **caractérisé en ce que** le signal électrique est modifié en fonction des propriétés électriques de la zone partielle du dispositif d'affichage (5).

20. Procédé selon la revendication 19, **caractérisé en ce que** le signal électrique modifié est dépouillé pour la détermination de l'information écrite dans la zone partielle du dispositif d'affichage (5).

21. Procédé selon une des revendications de 10 à 20, **caractérisé en ce qu'**une signature est entrée dans la carte à puce (1) pour vérification.
